# EUROPÄISCHE PATENTSCHRIFT

(11) **EP 2 469 296 B1**
(45) Veröffentlichungstag und Bekanntmachung des Hinweises auf die Patenterteilung: **24.10.2012**
(21) Anmeldenummer: 11184192.0
(22) Anmeldetag: 06.10.2011
(51) Int. Cl.: G01S 7/483, G01S 7/487, G01S 17/42

(54) **Optoelektronischer Sensor und Verfahren zur Erfassung und Abstandsbestimmung von Objekten**
Optoelectronic sensor and method for recording and determining the distance of an object
Capteur optoélectronique et procédé destiné à la détection et la détermination de l'éloignement d'objets

(30) Priorität: 21.12.2010 DE 102010061382
(43) Veröffentlichungstag der Anmeldung: 27.06.2012
(73) Patentinhaber: Sick AG, 79183 Waldkirch (DE)
(72) Erfinder: Gosch, Kirsten, 79108 Freiburg (DE); Feise, Gerold, 22335 Hamburg (DE); Jägel, Matthias, 79104 Freiburg (DE); Albert, Michael, 77955 Ettenheim (DE)
(74) Vertreter: Hehl, Ulrich

(56) Entgegenhaltungen:
- EP-A1- 1 522 870
- EP-A1- 2 189 814
- US-A1- 2004 169 840

## Beschreibung

Die Erfindung betrifft einen optoelektronischen Sensor, insbesondere Laserscanner, und ein Verfahren zur Erfassung und Abstandsbestimmung von Objekten nach dem Oberbegriff von Anspruch 1 beziehungsweise 15.

Für Abstandsmessungen, die einen großen horizontalen Winkelbereich des Messsystems erforderlich machen, eignen sich optoelektronische Systeme und besonders Laserscanner. In einem Laserscanner überstreicht ein von einem Laser erzeugter Lichtstrahl mit Hilfe einer Ablenkeinheit periodisch einen Überwachungsbereich. Das Licht wird an Objekten in dem Überwachungsbereich remittiert und in dem Scanner ausgewertet. Aus der Winkelstellung der Ablenkeinheit wird auf die Winkellage des Objektes und aus der Lichtlaufzeit unter Verwendung der Lichtgeschwindigkeit zusätzlich auf die Entfernung des Objektes von dem Laserscanner geschlossen.

Mit den Winkel- und Entfernungsangaben ist der Ort eines Objektes in dem Überwachungsbereich in zweidimensionalen Polarkoordinaten erfasst. Damit lassen sich die Positionen von Objekten ermitteln oder deren Kontur bestimmen Die dritte Raumkoordinate kann durch eine Relativbewegung in Querrichtung ebenfalls erfasst werden, beispielsweise durch einen weiteren Bewegungsfreiheitsgrad der Ablenkeinheit in dem Laserscanner oder indem das Objekt relativ zu dem Laserscanner befördert wird. So können auch dreidimensionale Konturen ausgemessen werden.

Neben solchen Messanwendungen werden Laserscanner auch in der Sicherheitstechnik zur Überwachung einer Gefahrenquelle eingesetzt, wie sie beispielsweise eine gefährliche Maschine darstellt. Ein derartiger Sicherheitslaserscanner ist aus der DE 43 40 756 A1 bekannt. Dabei wird ein Schutzfeld überwacht, das während des Betriebs der Maschine vom Bedienpersonal nicht betreten werden darf. Erkennt der Laserscanner einen unzulässigen Schutzfeldeingriff, etwa ein Bein einer Bedienperson, so löst er einen Nothalt der Maschine aus. Andere Eingriffe in das Schutzfeld, beispielsweise durch statische Maschinenteile, können vorab als zulässig eingelernt werden. Oft sind den Schutzfeldern Warnfelder vorgelagert, wo Eingriffe zunächst nur zu einer Warnung führen, um den Schutzfeldeingriff und damit die Absicherung noch rechtzeitig zu verhindern und so die Verfügbarkeit der Anlage zu erhöhen. Sicherheitslaserscanner arbeiten meist pulsbasiert.

In der Sicherheitstechnik eingesetzte Sensoren müssen besonders zuverlässig arbeiten und deshalb hohe Sicherheitsanforderungen erfüllen, beispielsweise die Norm EN13849 für Maschinensicherheit und die Gerätenorm EN61496 für berührungslos wirkende Schutzeinrichtungen (BWS). Zur Erfüllung dieser Sicherheitsnormen sind eine Reihe von Maßnahmen zu treffen, wie sichere elektronische Auswertung durch redundante, diversitäre Elektronik, Funktionsüberwachung oder speziell Überwachung der Verschmutzung optischer Bauteile, insbesondere einer Frontscheibe, und/oder Vorsehen von einzelnen Testzielen mit definierten Reflexionsgraden, die unter den entsprechenden Scanwinkeln erkannt werden müssen.

Für herkömmliche Laserscanner sind zwei grundsätzliche Prinzipien bekannt, die Lichtlaufzeit zu bestimmen. Bei phasenbasierten Verfahren wird das kontinuierliche Sendelicht moduliert und die Phasenverschiebung des empfangenen gegenüber dem gesendeten Licht ausgewertet. Bei pulsbasierten Verfahren oder Pulslaufzeitverfahren arbeitet der Sender in einem Einzelpulsbetrieb mit verhältnismäßig hohen Pulsenergien, und der Laserscanner misst Objektabstände anhand der Laufzeit zwischen dem Aussenden und Empfangen eines Einzellichtpulses.

Nachteilig an einem Pulslaufzeitverfahren ist, dass in der Regel eine große Sendeleistung und ein sehr empfindlicher Empfänger zur Verfügung stehen müssen, um eine signifikante Messreichweite zu erzielen. Besonders auf der Empfängerseite erhöhen sich dabei Bauraumbedarf und Herstellkosten, etwa für eine Lawinenphotodiode einschließlich Hochspannungserzeugung. Ein phasenbasiertes Verfahren mit Modulation eines Dauerstrich- bzw. CW-Lasers wiederum birgt den Nachteil, dass es nur einen beschränkten Eindeutigkeitsbereich von typischerweise wenigen Metern bietet. Zugleich ist die optische Ausgangsleistung des Senders bei diesem Verfahren üblicherweise gering, so dass speziell bei zusätzlichen äußeren Einflüssen ein geringes Signal/Rausch-Verhältnis besteht. Das Verfahren hat eine geringe Fremdlichtfestigkeit und einen stark eingeschränkten Dynamikbereich.

Die US 2004/0169840 A1 offenbart einen Fahrzeugradar, der einen Laserradarsensor mit einem rotierenden Polygonspiegel umfasst. Es ist ein erster Detektorschaltkreis vorgesehen, welcher Entfernungen aus wieder empfangen Einzelpulsen bestimmt, sowie ein zweiter Detektorschaltkreis, in dem eine Vielzahl der wieder empfangenen Einzelpulse integriert wird.

Von eindimensionalen Entfernungstastern ist bekannt, die Lichtlaufzeit durch Mittelung einer Vielzahl von Einzelmessungen zu bestimmen. Ein derartiges Verfahren wird in der EP 1 522 870 A1 beschrieben. Dabei ist auch abschließend die Anwendung in einem Scanner erwähnt, und es wird auf den Zusammenhang hingewiesen, dass durch langsamere Drehbewegung, d.h. geringere Scanfrequenz, eine höhere Mittelungstiefe erreicht werden kann. Außer dieser Abschlussbemerkung sind dem Dokument aber keine Erkenntnisse zu entnehmen, wie aus Einzelmessungen eine winkelaufgelöste Abstandsmessung bestimmbar ist.

Ein besonders effizientes und genaues Mittelungsverfahren für einen eindimensionalen Entfernungstaster wird in der DE 10 2007 013 714 A1 vorgestellt. Dabei wird eine Vielzahl von Einzelmessungen durch analoge Vorverarbeitung in ein bipolares Signal umgewandelt, anschließend binarisiert und so in einem Histogramm gesammelt. Aus dem Histogramm wird dann die Lichtlaufzeit ermittelt. Die EP 2 189 805, EP 2 189 804 und EP 2 189 814 setzen auf diesem Verfahren auf und erwähnen die Anwendbarkeit bei einem scannenden System, ohne aber auf die praktische Umsetzung einzugehen.

Es ist deshalb Aufgabe der Erfindung, ein auf statistischer Auswertung jeweils mehrerer Sendepulse basierendes Messverfahren zur robusten winkelaufgelösten Abstandsbestimmung einzusetzen.

Diese Aufgabe wird durch einen optoelektronischen Sensor nach Anspruch 1 oder 2 und ein Verfahren zur Erfassung und Abstandsbestimmung nach Anspruch 13 oder 14 gelöst. Dabei geht die Erfindung von den einleitend aus dem Stand der Technik bekannten Mittelungsverfahren aus, die als Mehrpulsverfahren eine dritte Klasse von Lichtlaufzeitmessungen neben Einzelpulslaufzeitverfahren und phasenbasierten Verfahren bilden. Der Grundgedanke der Erfindung besteht dann darin, eine geeignete Bündelung mehrerer Pulse zu einem gemeinsamen Histogramm anzugeben, um eine quasikontinuierliche Abtastung mit der gewünschten Winkelauflösung zu erzielen. Diese Zuordnung von mehreren einzelnen Pulsen zu bestimmten Erfassungswinkeln sorgt für Robustheit gegenüber absichtlichen und durch Störung verursachten Drehzahländerungen der Ablenkeinheit.

Die Erfindung hat den Vorteil, dass ein sehr kostengünstiger und kleiner Sensor mit einem großen horizontalen Sichtbereich oder Winkelbereich entsteht, dessen Messgenauigkeit gerade unter gestörten Bedingungen besonders hoch ist. Das erfindungsgemäß eingesetzte Mehrpulsverfahren hat einen deutlich größeren Eindeutigkeitsbereich und eine deutlich geringere Störanfälligkeit, weil durch die statistische Auswertung auch bei sehr ungünstigem Signal/Rauschverhältnis der Einzelmessung noch genaue Messungen möglich sind. Zudem treten bei Einsatz eines Mehrpulsverfahrens in einem scannenden System Vorteile auf, die bei einem einfachen Einstrahltaster nicht relevant sind. Denn im Gegensatz zu dem bekannten Pulslaufzeitverfahren ist eine quasikontinuierliche, also nahezu lückenlose Abtastung des gesamten Winkelbereichs möglich, und es werden eine Reihe von Anpassungsmöglichkeiten erschlossen. Damit können spezielle Messanforderungen erfüllt werden, oder es kann auf besondere Störungen reagiert werden, wie sie etwa bei führerlosen Transportsystemen oder der Fahrassistenz durch Vibrationen entstehen, die zu Drehzahlschwankungen führen.

Die Winkelmesseinheit stellt bevorzugt Winkelpositionssignale in einer vorgegebenen Winkelauflösung bereit. Die Winkelauflösung kann direkt der äquidistanten, gleichmäßigen inkrementellen Codierung einer Winkelmaßverkörperung entsprechen. Aus derart tatsächlich gemessenen Winkelpositionen kann aber auch durch Interpolation oder Extrapolation eine andere gleichmäßige oder in unterschiedlichen Erfassungsrichtungen unterschiedliche Winkelauflösung berechnet werden.

Das physisch in der Winkelmesseinheit bestimmte oder aus deren Signalen berechnete Winkelpositionssignal wird im einfachsten Fall als eine Art Winkeltrigger verwendet, woraufhin eine gewünschte Anzahl nachfolgender Empfangspulse die Gruppe bildet. Alternativ kann aber auch nachträglich eine andere Zuordnung erfolgen, bei welcher beispielsweise das Winkelpositionssignal am Ende oder an einer sonstigen Position innerhalb der Gruppe von Empfangspulsen liegt.

Die Auswertungseinheit ist bevorzugt dafür ausgebildet, jeweils zu einem Winkelpositionssignal eine vorgegebene Anzahl von Empfangspulsen für eine Gruppe auszuwählen. Diese Anzahl ist in einer Ausführungsform für alle Winkelpositionssignale die gleiche, so dass also zu jedem Erfassungswinkel ein Histogramm mit gleicher Anzahl von Messwiederholungen gebildet wird. Dabei ist nicht zwingend erforderlich, dass die Empfangspulse einer Gruppe direkt aufeinanderfolgen; so können beispielsweise Empfangspulse alternierend zwei unterschiedlichen Gruppen zugewiesen werden. Das kann dann dafür genutzt werden, abwechselnd Einzellichtpulse mit hoher und niedriger Leistung auszusenden. Dadurch erhält man einen Messwert aus einer Abtastung mit hoher Leistung für Ziele geringer Remission und einen Messwert aus einer Abtastung mit geringer Leistung für ein stark remittierendes Ziel wie einen Reflektor, welches Sättigung oder Übersteuerung vermeidet. Vorzugsweise ist der zeitliche Abstand zwischen zwei Einzellichtpulsen konstant, der Lichtsender arbeitet also mit einer konstanten Wiederholfrequenz. Alternativ werden, um die Abtastungen auf dem Zeitstrahl zu verschmieren und Artefakte durch ein diskretes Raster zu reduzieren, die Einzellichtpulse mit individuellen Zeitoffsets versehen, so dass sie nur im Mittel eine konstante Wiederholfrequenz erreichen.

Die Anzahl der Einzelpulse sowie der zeitliche Abstand zwischen je zwei Einzellichtpulsen ist bevorzugt klein genug, um einen Zeitpuffer zwischen dem jeweils letzten Empfangspuls einer Gruppe und dem nachfolgenden Winkelpositionssignal zu lassen. So wird demnach nur eine kleinere Anzahl von Empfangspulsen ausgewertet, als bei optimaler Ausnutzung des Zeitbudgets zwischen zwei Winkelpositionssignalen möglich wäre. Dadurch werden Schwankungen der Drehbewegung aufgefangen und sichergestellt, dass die Gruppe von Empfangspulsen beim nachfolgenden Winkelpositionssignal vollständig ist. Vorzugsweise werden auf ein Winkelpositionssignal hin auch nur so viele Einzellichtpulse erzeugt wie ausgewertet, es entstehen dann Sendepausen während des Zeitpuffers. Alternativ werden kontinuierlich Einzellichtpulse ausgesandt, während des Zeitpuffers aber nicht ausgewertet.

Alternativ zu einem Zeitpuffer wird bei jedem neuen Winkelpositionssignal die bestehende Gruppe abgeschlossen und eine neue Gruppe begonnen. Dann ist mitunter, besonders bei Änderungen der Drehgeschwindigkeit, die Anzahl Empfangssignale in den Gruppen untereinander verschieden. Dies führt zu einer unterschiedlichen Statistiktiefe und damit zu einer Reichweitenschwankung mit dem Erfassungswinkel.

Die Auswertungseinheit ist bevorzugt dafür ausgebildet zu prüfen, ob in dem Zeitraum, in dem die vorgegebene Anzahl von Empfangspulsen erfasst wird, ein weiteres Winkelpositionssignal liegt, und in diesem Fall den aus dem Histogramm der Gruppe bestimmten Messwert für den Objektabstand demjenigen Winkelpositionssignal zuzuordnen, dem die Empfangspulse mehrheitlich zugehören, insbesondere zu dem die aufaddierten Zeitabstände zu den Empfangspulsen der Gruppe am geringsten sind. Hierbei wird kein Zeitpuffer vorgehalten, damit die maximale Messinformation mit einer höchstmöglichen Anzahl von Einzelmessungen je Umdrehung der Ablenkeinheit erfasst wird. Um dennoch Reichweitenschwankungen bei unterschiedlichen Erfassungswinkeln zu vermeiden, wird die vorgegebene Anzahl an Empfangspulsen in einer Gruppe gesammelt, selbst wenn dazwischen ein weiteres Winkelpositionssignal liegt, welches eigentlich den Beginn der Erfassung einer neuen Gruppe für den nächsten Messwert erforderte. Im Anschluss wird der Messwert demjenigen Winkelpositionssignal zugeordnet, welches die Lage der Gruppe am besten repräsentiert. Solange sich die Drehgeschwindigkeit so verhält wie vorgesehen, sind die Zeitintervalle zwischen zwei Winkelpositionssignalen und die vorgegebene Anzahl vorzugsweise aufeinander abgestimmt, so dass diese nachträgliche Zuordnung entfällt. Ansonsten kann es durch fortgesetzte Verzögerung des Sammelns der vorgegebenen Anzahl auch dazu kommen, dass ein Messwert bereits dem übernächsten Winkelpositionssignal zugeordnet wird. Für das derart ausgelassene Winkelpositionssignal kann dann ein Messwert interpoliert werden.

Die Auswertungseinheit weist bevorzugt mindestens zwei Auswertungskanäle auf, um in jedem der Auswertungskanäle Empfangspulse in einem eigenen Histogramm zu sammeln und jeweils aus dem Histogramm die Lichtlaufzeit vom Sensor zu einem Objekt und daraus einen Messwert für den Objektabstand zu bestimmen. Wenn keine besonderen Zuordnungsvorschriften zwischen Empfangspulsen, Gruppen und Winkelpositionssignalen für die unterschiedlichen Kanäle vorgesehen sind, führt dies zu einer redundanten Messung zur Aufdeckung von Hardwarefehlern. Dies ist besonders in der Sicherheitstechnik relevant. Zugleich entsteht aber auch die Freiheit, den Auswertungskanälen unterschiedliche Gruppierungen zugrunde zu legen. Dies kann einerseits einer diversitär-redundanten Auswertung dienen, welche durch unterschiedliche Messverfahren mit dem gleichen Auswertungsziel eine höhere Robustheit zeigt als reine Redundanz. Andererseits lassen sich auf diese Weise aber auch die Probleme mit Änderungen der Drehgeschwindigkeit lösen und zusätzliche Messinformationen gewinnen. Eine weitere Ausführungsform wertet in einem Auswertungskanal Einzellichtpulse geringer Sendeleistung und in dem anderen Auswertungskanal alternierend ausgesandte Einzellichtpulse hoher Sendeleistung aus.

Die Auswertungskanäle sind besonders bevorzugt für eine überlappende Auswertung ausgebildet, bei der jeweils alternierend ein Auswertungskanal eine vorgegebene Anzahl von Empfangspulsen für eine Gruppe auswählt, die auf ein Winkelpositionssignal folgen. Damit wird eine lückenlose Abtastung erreicht, und es entfällt die Notwendigkeit eines Zeitpuffers oder einer nachträglichen Zuordnung zu Winkelpositionssignalen, die möglicherweise auch durch Interpolation zu überwindende Messlücken lässt. Wenn in dieser Ausführungsform ein Auswertungskanal bei Eintreffen des nächsten Winkelpositionssignals noch nicht die vorgegebene Anzahl von Empfangspulsen gesammelt hat, so stört dies nicht, weil ein anderer Auswertungskanal bereits überlappend eine neue Gruppe beginnt. Dies geschieht beispielsweise abwechselnd mit zwei Auswertungskanälen oder, wenn eine noch stärkere Überlappung der Gruppen gewünscht ist, zyklisch mit mehreren Auswertungskanälen. Eine stärkere Überlappung könnte beispielsweise nützlich sein, wenn bei großer Reichweite und/oder großen Schwankungen der Drehgeschwindigkeit eine feine Winkelauflösung erreicht werden soll.

Die Auswertungskanäle sind bevorzugt für eine parallele Auswertung ausgebildet. Das kann, insbesondere durch zusätzliche Auswertungskanäle, auch mit einer Überlappung kombiniert werden. Besonders bevorzugt sind die Kriterien für die Auswahl von Empfangspulsen zu einer Gruppe in den parallelen Auswertungskanälen unterschiedlich. Beispielsweise kann ein Auswertungskanal viele Gruppen mit einer geringen Anzahl von Empfangspulsen und der andere Auswertungskanal wenige Gruppen mit einer großen Anzahl von Empfangspulsen bilden. Damit stehen aus derselben physischen Messung sowohl Messwerte mit geringer Reichweite und hoher Winkelauflösung als auch Messwerte mit großer Reichweite und geringer Winkelauflösung zur Verfügung. Dies ist nur ein Beispiel für unterschiedliche Auswertungen. Auswertungskanäle können in einem anderen Beispiel mit einem gegenseitigen Versatz arbeiten, bei dem Gruppen mit einer gleichen vorgegebenen Anzahl von Empfangspulsen gebildet werden, der eine Auswertungskanal aber die Gruppen jeweils mit dem Winkelpositionssignal beginnt und die anderen Auswertungskanäle ihre Gruppen in gleichmäßigen Abständen zwischen zwei Winkelpositionssignalen beginnen. Dadurch entsteht eine Art gleitender Durchschnitt, mit einer Auflösungsvervielfachung entsprechend der Anzahl von Auswertungskanälen.

Die Auswertungseinheit ist bevorzugt dafür ausgebildet, die Auswahl von Empfangspulsen zu einer Gruppe zeitlich verzögert vorzunehmen. Damit wird nur noch eine zeitlich leicht verzögerte Quasi-Echtzeitauswertung der Messung erreicht, beispielsweise verzögert um eine oder eine halbe Scanperiode. Bei üblichen Drehfrequenzen der Ablenkeinheit gehen dabei aber nur geringe Bruchteile einer Sekunde gegenüber einer Echtzeitauswertung verloren. Dafür sind im Nachhinein beliebige und anpassbare Gruppenaufteilungen möglich. Die Empfangssignale sollten zu diesem Zweck eine Art Zeit oder Winkelstempel tragen, so dass im Nachhinein noch eine Zuordnung eines Empfangssignals zu einer Winkelposition möglich bleibt.

Die Auswertungseinheit ist bevorzugt dafür ausgebildet, in Abhängigkeit von dem Erfassungswinkel und/oder in Abhängigkeit eines zuvor bestimmten Objektabstands die Anzahl von Empfangspulsen in einer Gruppe anzupassen. Unterschiedliche Gruppengrößen haben die praktische Auswirkung einer unterschiedlichen Reichweite und Winkelauflösung. Bei einer Abhängigkeit vom Erfassungswinkel werden auf diese Weise Winkelbereiche mit höherer Reichweite bei geringerer Winkelauflösung gebildet und umgekehrt, so dass je nach Anwendung eine höhere Flexibilität gegeben ist. Eine adaptive Abhängigkeit der Gruppenzuordnung anhand eines zuvor bestimmten Objektabstands dient beispielsweise dazu, anfänglich den leeren Überwachungsbereich mit hoher Reichweite und geringer Winkelauflösung abzutasten, dann aber für bereits erfasste Objekte überall oder in einer Winkelumgebung von deren Erfassungswinkel die Reichweite herabzusetzen, um eine größere Winkelauflösung zu gewinnen.

Vorteilhafterweise ist ein analoger Vorverarbeiter vorgesehen, der einen Filter aufweist, um jeweils den Empfangspuls zu einem bipolaren vorverarbeiteten Signal umzuwandeln und über einen A/D-Wandler der Auswertungseinheit zuzuführen. Lichtsignale sind stets unipolar, weil Lichteinfall in dem Lichtempfänger nur ein positives Signal erzeugen kann. Durch einen nachgeschalteten Filter, der durch den Lichteinfall in eine Schwingung versetzt wird, beispielsweise einen Bandpassfilter oder ein Differenzierglied, entsteht ein bipolares Signal, in dem sich durch digitale Signalverarbeitung nach der A/D-Wandlung ein Empfangszeitpunkt anhand eines Nulldurchgangs bestimmen lässt. Dies ist wesentlich präziser als die Bestimmung der Lage eines beispielsweise positiven Peaks, weil der Nulldurchgang nicht von der Signalstärke und damit Sende- und Umgebungsparametern abhängt. Dem Filter ist bevorzugt ein Verstärker, insbesondere Transimpedanzverstärker vor- oder nachgeordnet. Außerdem weist der analoge Vorverarbeiter besonders bevorzugt einen Begrenzungsverstärker zur Verstärkung des positiven beziehungsweise negativen Anteils des Signals bis auf einen Sättigungswert auf, wobei der A/D-Wandler ein Binarisierer ist. Damit wird ein binäres Empfangssignal gebildet, welches eine besonders ressourcenschonende statistische Auswertung erlaubt.

Der Sensor weist bevorzugt eine Parametriereinrichtung auf, um eine höhere Winkelauflösung bei geringerer Reichweite des Sensors einzustellen oder umgekehrt. Die Parametriereinrichtung kann als Bedienfeld am Sensor oder als Anschluss für eine Datenverbindung ausgestaltet sein. Durch die zusätzliche Parametrierbarkeit entsteht eine höhere Flexibilität für Bedürfnisse der konkreten Anwendung. Umgesetzt wird die Einstellung durch eine veränderte Gruppenzuordnung, welche Empfangspulse je nach Parametrierung unter Erhöhen oder Herabsetzen der Reichweite über einen kleineren oder größeren Winkelbereich sammelt.

Das Histogramm ist bevorzugt schon vor dem Sammeln der Empfangspulse mit Vorladewerten vorbelegt, wobei insbesondere die Vorladewerte von dem Erfassungswinkel abhängig sind. Damit wird eine Erwartungshaltung abgebildet, die dann das Messergebnis modifiziert.

Die Vorladewerte sind bevorzugt aus einer Kalibriermessung in einem Referenzzustand des Überwachungsbereichs bestimmt. Die Erwartungshaltung wird so durch eine anfängliche Messung erhalten. Vorgeladen werden dann bevorzugt, gegebenenfalls nach Mittelung über eine größere Zahl von Kalibriermessungen oder andere Vorverarbeitung, nicht die Referenzwerte selbst, sondern deren Negation. Eine Messung gleicht dann automatisch zunächst die Erwartungshaltung aus, ehe die Messwerte tatsächlich durchschlagen. Als ein Beispiel ist das Vorladen eines Frontscheibenreflexes zu nennen. Dabei handelt es sich um einen Anteil des Empfangssignals, das von einer Reflexion der Einzellichtpulse an der Frontscheibe schon im Sensorinneren herrührt und die Messung stört. Die typische Form des Frontscheibenreflexes kann dann vorab gemessen und in den Histogrammen vorgeladen werden, so dass die entstehenden Histogramme von dieser Störung befreit sind. Ein anderes Beispiel ist das Vorladen einer Referenzszenerie. Der Sensor registriert dann nur noch dynamische Änderungen einer bekannten Objektanordnung. Im Unterschied zu einem Vorladen des Frontscheibenreflexes, der in der Regel alle Histogramme in gleicher Weise betrifft, werden bei einer Referenzszenerie die Histogramme winkelabhängig unterschiedlich vorgeladen.

Das erfindungsgemäße Verfahren kann auf ähnliche Weise durch weitere Merkmale ausgestaltet werden und zeigt dabei ähnliche Vorteile. Derartige weitere Merkmale sind beispielhaft, aber nicht abschließend, in den sich an die unabhängigen Ansprüche anschließenden Unteransprüchen beschrieben.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:
- Fig. 1: eine schematische Schnittdarstellung durch einen Laserscanner;
- Fig. 2: eine Blockdarstellung einer analogen Signalvorverarbeitung und einer digitalen Auswertung des Laserscanners gemäß Figur 1;
- Fig. 3: eine Darstellung der Signale in verschiedenen Verarbeitungsstufen der Vorverarbeitung und Auswertung gemäß Figur 2;
- Fig. 4a: einen beispielhaften zeitlichen Intensitätsverlauf eines von einem Lichtempfänger eines Laserscanners aufgezeichneten Empfangssignals bei geringer Mittelungstiefe und damit Reichweite;
- Fig. 4b: ein Intensitätsverlauf ähnlich Fig. 4a bei hoher Mittelungstiefe und damit Reichweite;
- Fig. 5a: eine schematisch Draufsicht auf die Winkelverteilung der Einzellichtpulse eines Laserscanners bei hoher Reichweite und geringer Winkelauflösung;
- Fig. 5b: eine Darstellung ähnlich Fig. 5a bei geringer Reichweite und hoher Winkelauflösung;
- Fig. 6a: eine schematische Draufsicht auf die Winkelverteilung der Einzellichtpulse eines Laserscanners als Vergleichsbild;
- Fig. 6b: eine Darstellung ähnlich Fig. 6a bei erhöhter Scanfrequenz und deshalb verringerter Reichweite;
- Fig. 6c: eine Darstellung ähnlich Fig. 6a bei erhöhter Scanfrequenz und einer anstelle der Reichweite verringerten Winkelauflösung;
- Fig. 7a: eine zeitliche Übereinanderstellung von Winkelpositionssignalen, Einzellichtpulsen und deren Gruppierung bei regelmäßiger Drehung der Ablenkeinheit;
- Fig. 7b: eine Darstellung ähnlich Fig. 7b bei einer Drehzahlschwankung; und
- Fig. 8: eine zeitliche Übereinanderstellung der Einzellichtpulse, der Signale einer Winkelmesseinheit, der daraus abgeleiteten Winkelpositionssignale und Winkelsegmente sowie einer dynamischen Zuordnung von Gruppen von Einzellichtpulsen zu Winkelsegmenten.

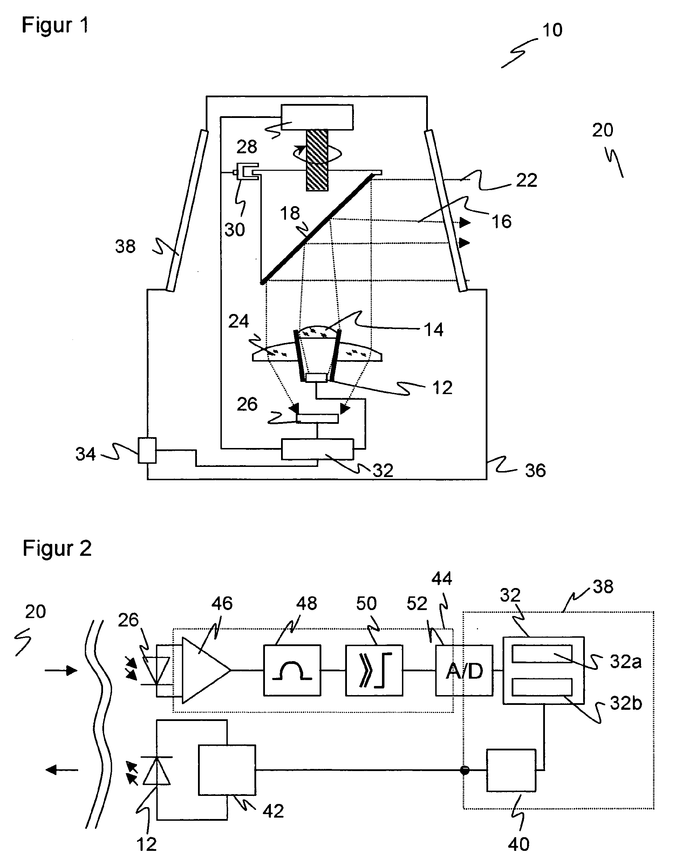

Fig. 1 zeigt eine schematische Schnittdarstellung durch einen erfindungsgemäßen optoelektronischen Sensor in einer Ausführungsform als Laserscanner 10. Ein Lichtsender 12, beispielsweise mit einer Laserlichtquelle, erzeugt mit Hilfe einer Sendeoptik 14 einen Sendelichtstrahl 16. Der Sendelichtstrahl 16 wird mittels einer Ablenkeinheit 18 in einen Überwachungsbereich 20 ausgesandt und dort von einem gegebenenfalls vorhandenen Objekt remittiert. Das remittierte Licht 22 gelangt wieder zu dem Laserscanner 10 zurück und wird dort über die Ablenkeinheit 18 mittels einer Empfangsoptik 24 von einem Lichtempfänger 26 detektiert, beispielsweise einer Photodiode oder für höhere Empfindlichkeit einer Lawinenphotodiode (APD). Bei dem dargestellten Laserscanner 10 befindet sich der Lichtsender 12 und dessen Sendeoptik 14 in einer zentralen Öffnung der Empfangsoptik 24. Dies ist nur eine beispielhafte Möglichkeit der Anordnung. Die Erfindung umfasst daneben alternative Lösungen, etwa mit einem eigenen Spiegelbereich für den Sendelichtstrahl 16 oder mit Teilerspiegeln.

Die Ablenkeinheit 18 wird von einem Motor 28 in eine kontinuierliche Drehbewegung mit einer Scanfrequenz versetzt. Dadurch tastet der Sendelichtstrahl 16 während jeder Scanperiode, also einer vollständigen Umdrehung bei der Scanfrequenz, eine Ebene ab. Am Außenumfang der Ablenkeinheit 18 ist eine Winkelmesseinheit 30 angeordnet, um die jeweilige Winkelstellung der Ablenkeinheit 18 zu erfassen. Die Winkelmesseinheit 30 wird hier beispielhaft von einer Strichscheibe als Winkelmaßverkörperung und einer Gabellichtschranke als Abtastung gebildet.

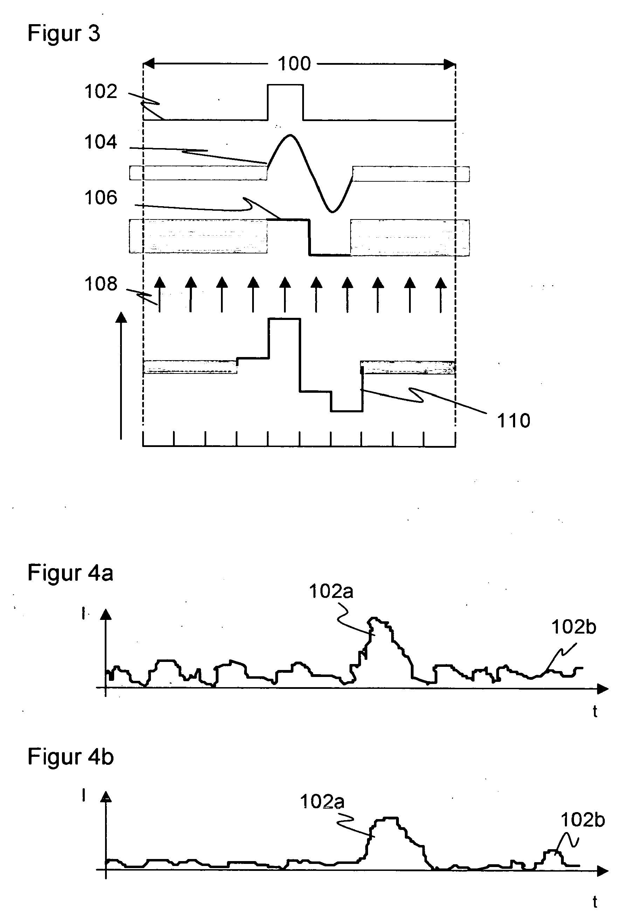

Eine Auswertungseinheit 32 ist mit dem Lichtsender 12, dem Lichtempfänger 26, dem Motor 28 und der Winkelmesseinheit 30 verbunden. In einem anhand der Figuren 2 und 3 noch genauer zu erläuternden Mehrpulsverfahren wird die Lichtlaufzeit zwischen Aussenden des Sendelichtstrahls 16 und Empfang von remittiertem Licht 22 gemessen, um unter Verwendung der Lichtgeschwindigkeit auf die Entfernung eines angetasteten Objektes von dem Laserscanner 10 zu schließen. Die jeweilige Winkelstellung, unter welcher dabei der Sendelichtstrahl 16 ausgesandt wurde, ist der Auswertungseinheit von der Winkelmesseinheit 30 bekannt. Dabei sind die Lichtlaufzeiten gegenüber üblichen Drehfrequenzen der Ablenkeinheit vernachlässigbar, so dass der Sendelichtstrahl 16 praktisch unter demselben Winkel ausgesandt wie zugehöriges remittiertes Licht 22 empfangen wird.

Somit stehen nach jeder Scanperiode über den Winkel und die Entfernung zweidimensionale Polarkoordinaten aller Objektpunkte in dem Überwachungsbereich 20 zur Verfügung. Damit sind die Objektpositionen beziehungsweise Objektkonturen bekannt und können über eine Schnittstelle 34 übertragen oder am Laserscanner 10 angezeigt werden. Die Schnittstelle 34 dient umgekehrt auch als Parametrierschnittstelle, über welche der Auswertungseinheit 32 Daten eingespielt werden können. Alternativ kann eine eigene Parametrierschnittstelle vorgesehen sein. Bei Anwendungen in der Sicherheitstechnik kann die Schnittstelle 34 sicher ausgebildet, insbesondere ein sicherer Ausgang (OSSD, Output Signal Switching Device) für ein sicherheitsgerichtetes Abschaltsignal bei Erkennen einer Schutzfeldverletzung sein.

Der Laserscanner 10 ist in einem Gehäuse 36 untergebracht, welches eine umlaufende Frontscheibe 38 aufweist. Die Geometrie des Gehäuses 36 und der Frontscheibe 38 sind ebenso wie die Gestaltung von Sende- und Empfangskanal rein beispielhaft zu verstehen. Es sind zahlreiche alternative Konzepte bekannt, bei denen die Erfindung ebenfalls einsetzbar ist.

Erfindungsgemäß erfolgt die Laufzeitmessung in einem Mehrpulsverfahren, das nun anhand der Figuren 2 und 3 näher erläutert wird. Dabei bezeichnen hier und im Folgenden gleiche Bezugszeichen die gleichen Merkmale. Das Mehrpulsverfahren ist für eindimensionale Entfernungstaster aus der einleitend genannten DE 10 2007 013 714 bekannt, und hierauf wird für ergänzende Erklärungen verwiesen.

Die Auswertungseinheit 32 mit hier beispielhaft zwei Auswertungskanälen 32a-b ist auf einem digitalen Baustein 38 implementiert, beispielsweise einem FPGA (Field Programmable Gate Array). Auf einem Sendepfad veranlasst die Auswertungseinheit 32, die zugleich als Steuerungseinheit des Laserscanners 10 fungiert, über eine Verzögerungseinrichtung 40 und eine Lasertreiberschaltung 42 den Lichtsender 12 zum Aussenden von Einzellichtpulsen zu wohldefinierten Zeitpunkten. Die Verzögerungseinheit 40 kann durch Register, Zähler und dergleichen des FPGA realisiert sein.

Das remittierte Licht 22 eines Einzellichtpulses wird von dem Lichtempfänger 26 in einen Empfangspuls gewandelt und über einen analogen Vorverarbeiter 44 mit einem Vorverstärker 46, einem Filter 48 und einem Begrenzerverstärker 50 sowie über einen A/D-Wandler 52 der Auswertungseinheit 22 zugeführt. Vorverstärker 46 und Filter 48 können auch vertauscht angeordnet sein.

Die dabei in den verschiedenen Zwischenstufen entstehenden Signale zeigt Figur 3. Der Lichtsender 12 erzeugt in jeder Messperiode 100 jeweils einen Einzellichtpuls, der die Bestimmung eines präzisen Zeitpunkts ermöglicht. Dafür eignet sich ein Rechteckpuls, es sind aber auch andere Pulse vorstellbar, wie beispielsweise Gausspulse. Der Einzellichtpuls wird in dem Überwachungsbereich 20 reflektiert oder remittiert und dann in dem Lichtempfänger 26 in einen elektrischen Empfangspuls 102 umgewandelt und in dem Transimpedanzverstärker 46 verstärkt. Der Empfangspuls 102 ist idealisiert dargestellt, unter realistischen Bedingungen kämen Rauschanteile und Formverzerrungen hinzu.

Der Empfangspuls 102 ist aufgrund der Natur des Lichtes immer ein unipolares Signal. In dem Filter 48, beispielsweise einem Bandpassfilter, wird daraus ein bipolares Signal 104, von dem nur die beiden ersten Schwingungen gezeigt sind. Neben dem eigentlichen bipolaren Signal 104 symbolisieren graue Rechtecke einen Rauschpegel. In dem Begrenzungsverstärker 50 wird das bipolare Signal 104 bis in die Sättigung hinein verstärkt und abgeschnitten, so dass das eigentliche Signal zu einer Rechteckflanke 106 und der durch graue Rechtecke dargestellte Rauschpegel in seiner Amplitude über den gesamten Dynamikbereich gedehnt wird.

Die Rechteckflanke 106 wird in dem insbesondere als Binarisierer ausgebildeten A/D-Wandler 52 abgetastet. Jeder Stützpunkt der Abtastung wird durch einen Pfeil 108 symbolisiert. Die entstehende Bitfolge wird in der Auswertungseinheit 32 verwendet, um ein Histogramm 110 zu bilden. Dafür ist für jedes Bin ein Akkumulator vorgesehen, der nur bei einem zugehörigen Bitwert "1" heraufgezählt wird. Bei idealen, unverrauschten Signalen würde in diesem Histogramm nur dasjenige Bin gefüllt, über dem die Rechtflanke 106 liegt. Der von dem Begrenzungsverstärker 34 angehobene Rauschpegel füllt aber auch die übrigen Bins, und zwar wegen der Zufälligkeit des Rauschens im Erwartungswert etwa in jeder zweiten Messperiode 100.

Wird das soeben beschriebene Verfahren iteriert und das Histogramm 110 über n Messperioden 100 gebildet, so sind die Bins durch das Rauschen ungefähr mit dem Wert n/2 gefüllt, wobei statistische Schwankungen hinzukommen. Dieser Wert n/2 entspricht aufgrund der Binarisierung dem Signalwert Null. Daraus erhebt sich nach oben das durch den positiven Teil des bipolaren Signals 104 gebildete Maximum und nach unten das entsprechende Minimum heraus. Den dazwischenliegenden Nulldurchgang detektiert die Auswertungseinheit 32, um den Empfangszeitpunkt unabhängig von dem Signalpegel zu bestimmen.

Durch die statistische Auswertung einer Vielzahl von Einzelmessungen wird das Signal-Rausch-Verhältnis so weit angehoben, dass auch bei gestörten Umgebungsbedingungen robuste Entfernungsmessungen möglich sind. Dies gilt auch dann, wenn ein einzelner verstärkter Empfangspuls 102 so stark verrauscht ist, dass keinerlei Unterschiede zwischen Nutzsignal und Rauschen erkennbar sind.

Figur 3 zeigt nur einen relevanten Ausschnitt der Messperiode 100 um den Empfangszeitpunkt herum. Um Speicher zu sparen, kann dieser Zeitbereich vorab gesucht und das Histogramm 110 nur für einen Teil der Messperiode 100 gebildet werden.

Erfindungsgemäß werden wie soeben erläutert Einzellichtpulse ausgesandt und von der Auswertungseinheit 32 je Messwert in einem Histogramm 110 gesammelt und ausgewertet. Durch die Drehbewegung der Ablenkeinheit 18 erhält jeder Einzellichtpuls einen eigenen Winkelversatz. Das Mehrpulsverfahren unterstützt eine Austauschbeziehung zwischen Scanfrequenz, Winkelauflösung und Reichweite. Diese hängen über die Statistik- oder Mittelungstiefe miteinander zusammen, also die Anzahl an Empfangspulsen 102, die jeweils in einem Histogramm 110 für einen Messwert zusammengefasst werden. Eine vierte denkbare Stellschraube bietet die Wiederholfrequenz der Einzellichtpulse, die aber hier als konstant angenommen wird.

Die Austauschbarkeit der genannten Parameter wird nun anhand der Figuren 4 bis 6 erläutert. Figur 4a zeigt einen zeitlichen Intensitätsverlauf bei geringer, Figur 4b dagegen bei höherer Mittelungstiefe. Ein Empfangspuls 102b im Nahbereich ist in beiden Fällen gut vom Rauschpegel unterscheidbar. Dagegen lässt sich ein Empfangspuls 102b im Fernbereich nur bei der höheren Mittelungstiefe gemäß Figur 4b vom Rauschen separieren. Je größer demnach die Statistiktiefe, umso höher wird die Reichweite des Laserscanners 10.

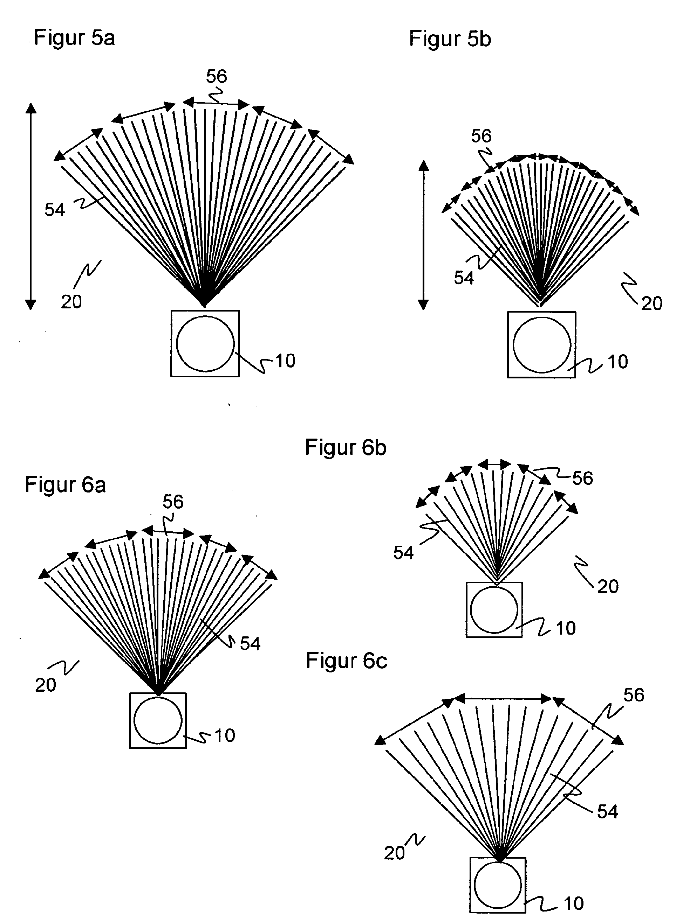

Die Figuren 5 und 6 zeigen jeweils den Laserscanner 10 und Einzellichtpulse 54 über einen Teil der Scanperiode in der Draufsicht. Dabei sind diejenigen Einzellichtpulse 54, deren zugehörige Empfangspulse 102 jeweils in einem Histogramm 110 zusammengefasst werden, durch einen Pfeil 56 verbunden. In der Realität würde allerdings meist eine sehr viel größere Anzahl von beispielweise einigen hundert oder noch mehr Einzellichtpulsen 54 je Grad ausgesandt.

Figur 5 erläutert die Austauschbarkeit von Winkelauflösung und Reichweite. In Figur 5a werden die Einzellichtpulse 54 jeweils zu größeren Gruppen 56 zusammengefasst. Deshalb sind nach dem in Figur 4 illustrierten Zusammenhang Objekte auch noch in einer relativ großen Reichweite erfassbar. Dafür benötigt jede Gruppe 56 einen verhältnismäßig großen Winkelbereich. Soll dagegen wie in Figur 5b eine feinere Winkelauflösung erzielt werden, so werden die Gruppen 56 kleiner, und die verringerte Mittelungstiefe führt zu einem schlechteren Signal/Rauschverhältnis und damit einer verminderten Reichweite.

Eine ganz ähnliche Austauschbarkeit ist auch für die Scanfrequenz gegeben. Figur 6a zeigt ein Vergleichsbild bei einer bestimmten Scanfrequenz. Wird die Scanfrequenz erhöht, so fallen über dem selben Winkelbereich weniger Einzellichtpulse 54 ab. Man kann nun entweder wie in Figur 6b gezeigt die Winkelauflösung beibehalten. Dann reduziert sich wegen der geringeren Statistiktiefe die Reichweite. Alternativ kann wie in Figur 6c die Reichweite aufrecht erhalten werden, jedoch verschlechtert sich dann die Winkelauflösung, weil für dieselbe Statistiktiefe Einzellichtpulse 54 über einen größeren Winkelbereich gesammelt werden müssen. Selbstverständlich sind nach diesem Prinzip alle Zwischenstufen denkbar, bei der also sowohl Reichweite als auch Winkelauflösung herabgesetzt werden, jedoch jeweils in geringerem Ausmaß.

Erfindungsgemäß ist vorgesehen, diese Austauschbarkeit auszunutzen und die Reichweite, Scanfrequenz und Winkelauflösung parametrierbar zu gestalten. Der Anwender gibt dann beispielsweise eine oder mehrere der Größen vor, und der Laserscanner 10 passt über die Statistiktiefe die übrigen Größen an. Ebenso sind adaptive Verfahren denkbar, bei denen Reichweite und Winkelauflösung variabel sind. Dabei ist eine zeitliche Abhängigkeit ebenso möglich wie eine Sichtwinkelabhängigkeit. Es wird dann beispielsweise ein bestimmte Winkelbereich bei geringer Reichweite und hoher Winkelauflösung, der Restwinkelbereich bei hoher Reichweite und geringer Winkelauflösung erfasst. Ein anderes Beispiel ist ein führerloses Transportfahrzeug, welches zunächst mit einer groben Winkelauflösung und hoher Reichweite navigiert, um dann bei Erfassung eines Objekts auf eine zunehmend bessere Winkelauflösung umzuschalten, während die Reichweite an die nun bekannte Objektentfernung angepasst wird. Auch dies kann zusätzlich winkelabhängig geschehen.

Das Mehrpulsverfahren arbeitet quasikontinuierlich, weil der Lichtsender 12 fortlaufend Einzellichtpulse 54 aussendet, jeweils eine Gruppe 56 der daraufhin registrierten Empfangspulse 102 zusammengefasst und in einem Histogramm 110 gesammelt und direkt im Anschluss die nächste Gruppe 56 ausgewertet wird. Dabei entsteht eventuell eine Pause für die Auswertung selbst.

Damit wird im Prinzip ein lückenlos scannendes System aufgebaut, das bei keinem Scanwinkel eine Scanlücke zeigt. Je nach Einsatzbedingungen ist der Laserscanner 10 aber mehr oder weniger großen Drehzahlschwankungen ausgesetzt, beispielsweise durch Erschütterungen oder Rütteln. Dann kann es passieren, dass bereits die Auswertung für einen neuen Messwert mit einem neuen Histogramm 110 beginnen müsste, ehe die aktuelle Messung abgeschlossen ist.

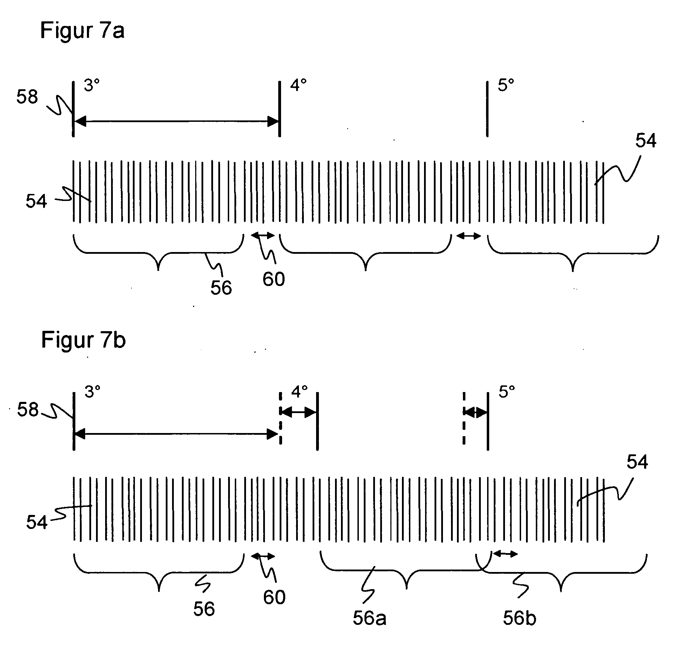

Figur 7 illustriert diese Situation. Figur 7a zeigt einen Idealfall ohne Drehzahlschwankung. Die Winkelmesseinheit 30 liefert gleichmäßige, äquidistante Winkelpositionssignale 56, und die Einzellichtpulse 54 beziehungsweise deren zugehörige Empfangspulse 102 werden überschneidungsfrei in Gruppen 56 zusammengefasst. Die Pfeile 60 bezeichnen ein Totzeitintervall, das für die Auswertung des Histogramms 110 benötigt wird. In Figur 7b gerät das Zeitverhalten aufgrund einer Drehzahlschwankung durcheinander. Die Gruppe 56a bei 4° sammelt noch Einzellichtpulse 54, die eigentlich bereits der Gruppe 56b bei 5° zugehören.

Eine mögliche Ursache für derartige Fehlzuordnungen liegt in einer zu geringen physischen Auflösung der Winkelmesseinrichtung 30, etwa bei Verwendung einer Strichscheibe. Die Winkelpositionssignale für die gewünschte Winkelauflösung müssen dann interpoliert werden und stehen nicht in Echtzeit zur Verfügung.

Damit wird bisweilen erst im Nachhinein klar, dass Empfangspulse 102 fälschlich noch in dem früheren Histogramm 110 gesammelt wurden. Ein einfacher Ausweg besteht darin, die Auswertung zu verzögern, also sämtliche Empfangspulse 102 zunächst nur als solche zwischenzuspeichern und erst im Nachhinein zu gruppieren und statistisch auszuwerten. Dadurch entsteht aber zusätzlicher Speicheraufwand, und die Echtzeitmessfähigkeit geht verloren. Ein anderer nahe liegender Ausweg wäre, den Messwert zu verwerfen, wenn sich herausstellt, dass das Histogramm 110 bereits Empfangspulse 102 des nachfolgenden Winkelbereichs enthält. Dabei entstehen dann aber Scanlücken.

Deshalb ist in einer erfindungsgemäßen Ausführungsform eine dynamische Anpassung der Statistiktiefe vorgesehen. In einer ganz einfachen Implementierung wird jede Gruppe abgeschlossen, wenn ein neues Winkelpositionssignal 58 eintrifft, unabhängig von der damit erreichten Statistiktiefe. Gemäß der oben erläuterten Austauschbeziehung resultiert hieraus letztlich eine Reichweitenschwankung in Abhängigkeit des Winkels, die aber häufig eher hinnehmbar ist als eine Scanlücke.

Für gewöhnlich wird man aber eine Reichweite und damit eine Statistiktiefe vorgeben wollen. Mit anderen Worten ist die Anzahl der Einzellichtpulse 54 und damit der zugehörigen Empfangspulse 102 je Gruppe 56 vorab festgelegt. Diese Vorgabe kann, wie oben schon ausgeführt, durchaus dynamisch sein, also mit dem Winkelbereich beziehungsweise mit der Zeit varüeren.

Um Drehzahlschwankungen auszugleichen, wird dann in einer weiteren Ausführungsform ein Reservepuffer vorgehalten. Zwischen je zwei Gruppen 56 wird ein vergrößerter Bereich ähnlich der Totzone 60 vorgehalten, in dem im Idealfall der Figur 7a dem Histogramm 110 keine Empfangspulse 102 hinzugefügt werden. Tritt dann eine Drehzahlschwankung auf, so wird die der Reservepuffer verwendet, um die vorgegebene Anzahl von Empfangspulsen 102 noch vor dem nächsten Winkelpositionssignal 58 zu erreichen. Damit entfernt sich das Verfahren umso weiter von der quasikontinuierlichen Auswertung, je größer der Reservepuffer gewählt ist.

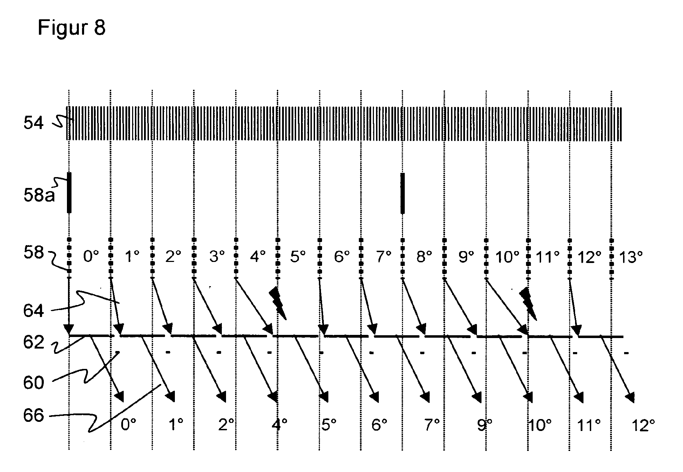

Figur 8 zeigt eine weitere Ausführungsform der Erfindung, die einsetzbar ist, um den Reservepuffer zu vermeiden und/oder für den Fall vorzusorgen, dass der Reservepuffer nicht ausreicht, um Drehzahlschwankungen aufzufangen. Wie schon in Figur 7 ist im oberen Teil der Figur 8 die zeitliche Abfolge der Einzellichtpulse 54 gezeigt. Darunter sind die von der Winkelmesseinheit 30 erzeugten Winkelsignale 58a dargestellt, aus denen durch Interpolation die Winkelpositionssignale 58 mit der gewünschten Winkelauflösung abgeleitet werden. Alternativ kann die Winkelmesseinheit 30 unmittelbar ein gewünschtes Winkelraster mit Winkelpositionssignalen 58 liefern.

Unkritisch ist, wenn eine Zeitspanne 62 zum Sammeln einer vorgegebenen Anzahl von Empfangspulsen 102 einschließlich der Totzeit 60 für die Auswertung kleiner ist als das Zeitintervall zwischen zwei Winkelpositionssignalen 58. Dann wird ein Messwert erzeugt und für den nächsten Messwert auf das nächste Winkelpositionssignal 58 gewartet.

Dargestellt in Figur 8 ist aber der Fall, bei dem aufgrund einer Drehzahlschwankung die Zeitintervalle zwischen zwei Winkelpositionssignalen 58 nicht genügen, um darin die erforderliche Anzahl von Empfangspulsen 102 in einem Histogramm 110 zu sammeln. Dann wird unmittelbar im Anschluss an eine Messung sofort die nächste Messung gestartet. Das kann das zeitliche Auseinanderlaufen nicht verhindern, grenzt es aber zumindest ein. Der Beginn einer jeden Messung wird durch Pfeile 64 illustriert. Ein Messwert wird dann nachträglich demjenigen Winkelsegment zugeordnet, in dem die Mehrheit, insbesondere mehr als 50% der Einzellichtpulse 45 beziehungsweise der zugehörigen Empfangspulse 102 liegt. Dies wird durch weitere Pfeile 66 gezeigt. Somit muss hier nicht nur der Messwert, sondern auch der zugehörige Winkel als Ausgabewert übertragen werden.

Folgen mehrere verkürzte Winkelsegmente aufeinander, dann kann es Winkelpositionssignale 58 geben, die gar keine neue Messung auslösen, weil die vorherige Messung noch das gesamte verfügbare Zeitbudget aufbraucht. Dies ist in dem Beispiel der Figur 8 bei 5° und bei 11° der Fall. Für diese Winkelpositionssignale 58 stehen zunächst keine Messwerte zur Verfügung. Die Messwerte können aber bei Bedarf von den benachbarten Winkelpositionssignalen 58 interpoliert werden. Die kontinuierliche und lückenlose Überwachung bleibt sichergestellt, weil Einzellichtpulse 54 zu jedem Zwischenwinkel in die Messung eingeflossen sind. Es hat dabei weiterhin, bezogen auf die reale Ausleuchtung mit dem Sendelichtstrahl 16, eine quasi-kontinuierliche Abtastung stattgefunden. Die Pulsfolge der Einzellichtpulse 54 gegenüber dem Drehwinkel war aber aufgrund der plötzlichen Drehzahlerhöhung langsamer angelegt als notwendig gewesen wäre, so dass effektiv die Winkelauflösung temporär absinkt.

Die messtechnisch präziseste Auswertung besteht darin, mehrere Auswertungskanäle 32a-b vorzusehen. Dabei setzt der eine Auswertungskanal 32a erforderlichenfalls seine Histogrammerzeugung auch über ein weiteres Winkelpositionssignal 58 hinweg fort, während überlappend der andere Auswertungskanal 32b bereits eine weitere Messung mit dem weiteren Winkelpositionssignal 58 als Startsignal beginnt. Die Statistiktiefe und somit die Reichweite und die Winkelauflösung bleiben dann gänzlich unberührt von Drehzahlschwankungen. Lediglich die Unabhängigkeit der Messwerte ist geringfügig beeinflusst, weil Empfangspulse 102 im Überschneidungsbereich nach dem weiteren Winkelpositionssignal 58 doppelt in den früheren und den späteren Messwert einfließen. Dies hat aber keine praktischen Auswirkungen, weil dennoch sämtliche Empfangspulse 102 aus realen Messungen bei dem zugehörigen Erfassungswinkel stammen.

Mehrere Auswertungskanäle 32a-b lassen sich zusätzlich oder alternativ auch dafür verwenden, dieselben Messdaten in Form der Empfangspulse 102 parallel mehreren unterschiedlichen Auswertungen zu unterziehen. Dies dient bei redundanter oder diversitär-redundanter Auswertung einer Überprüfung der Verlässlichkeit der Auswertung. Darüber hinaus können aber auch in den Parallelzweigen unterschiedliche Kriterien an die Reichweite und Winkelauflösung angelegt werden. Somit wird beispielsweise zeitgleich eine Messung mit hoher Reichweite und geringer Winkelauflösung und eine Messung mit geringer Reichweite und hoher Winkelauflösung ausgeführt, und später wird die benötigte Messung ausgewählt oder es werden Messungen miteinander verglichen oder verrechnet.

Die parallelen Auswertungskanäle 32a-b können auch einen untereinander verschiedenen Zeitversatz zu den Winkelpositionssignalen 58 aufweisen. Dadurch werden letztlich ähnlich einem gleitenden Durchschnitt zueinander versetzte Winkelskalen abgerastert, die anschließend für eine verbesserte Winkelauflösung übereinander gelegt werden. Im Gegensatz zu einem gleitenden Durchschnitt muss aber kein Speicher für die Einzelmessungen verfügbar sein, um die jeweiligen Empfangspulse 102 beim Weiterschieben des Fensters aus dem Histogramm 110 zu entfernen, da jeweils ein Histogramm 110 gesammelt, ausgewertet und dann verworfen wird.

Als Ausgangszustand des Histogramms 110 wurde in den bisher beschriebenen Ausführungsformen zumindest implizit angenommen, dass alle Bins leer sind. Hiervon kann auch gezielt abgewichen und das Histogramm 110 mit Vorladewerten vorbelegt werden. Dabei sind sowohl winkelunabhängige als auch winkelabhängige Vorladewerte denkbar.

Eine Anwendung besteht in einer Unterdrückung eines Frontscheibenreflexes, den der Sendelichtstrahl 16 beim Austritt aus dem Laserscanner 10 durch die Frontscheibe 38 erzeugt. Analog können aber auch andere Störeinflüsse wie optisches oder elektrisches Übersprechen kompensiert werden. Schließlich ist prinzipiell gerade bei statischen Anwendungen auch denkbar, eine Referenzszene durch Vorladewerte einzulernen, um dann im Betrieb besonders schnell und empfindlich auf Bewegungen oder zusätzliche Objekte zu reagieren.

Dazu werden diese Störungen in Kalibriermessungen mit der späteren Winkelauflösung ab Werk oder am Einsatzort eingelernt und die dabei gemessenen Vorladewerte anschließend im Betrieb mit negativem Vorzeichen bei Bilden eines jeden neuen Histogramms in dessen Bins vorbelegt. Dabei sollte eine Skalierung anhand der beim Einlernen und der im Betrieb verwendeten Statistiktiefe erfolgen. Vorteilhafterweise werden die Vorladewerte bereits mit der späteren Statistiktiefe eingelernt, aber dies ist wegen der adaptiven Elemente der Erfindung nicht immer möglich.

Wenn nun die Empfangspulse 102 in dem derart vorbelegten Histogramm 110 gesammelt werden, so wird aufgrund der Vorladewerte die eingelernte bekannte Störung automatisch und zu einem sehr frühen Zeitpunkt im Messpfad kompensiert.

Obwohl die Erfindung anhand von Figuren und Ausführungsbeispielen beschrieben ist, umfasst sie auch deren Kombinationsmöglichkeiten.

## Patentansprüche

1. Optoelektronischer Sensor (10), insbesondere Laserscanner, zur Erfassung und Abstandsbestimmung von Objekten in einem Überwachungsbereich (20) mit einem Lichtsender (12) zum Aussenden eines Sendelichtstrahls (16) mit einer Vielzahl aufeinanderfolgender Einzellichtpulse (54), einer drehbaren Ablenkeinheit (18) zur periodischen Ablenkung des Sendelichtstrahls (16) in den Überwachungsbereich (20), einer Winkelmesseinheit (30) zur Erzeugung von Winkelpositionssignalen (58) in Abhängigkeit von einer Winkelstellung der Ablenkeinheit (18), einem Lichtempfänger (26) zum Erzeugen von Empfangspulsen (102) aus dem von Objekten in dem Überwachungsbereich (20) remittierten oder reflektierten Sendelicht und einer Auswertungseinheit (32), welche dafür ausgebildet ist, eine Vielzahl von Empfangspulsen (102) in einem zeitlichen Histogramm (110) zu sammeln und aus dem Histogramm (110) die Lichtlaufzeit vom Sensor (10) zu einem Objekt und daraus einen Messwert für den Objektabstand zu bestimmen,
wobei
die Auswertungseinheit (32) dafür ausgebildet ist; jeweils anhand des Winkelpositionssignals (58) eine Gruppe (56) von Empfangspulsen (102) auszuwählen, die in einem Histogramm (110) gesammelt wird, und den aus dem Histogramm (110) der Gruppe (56) bestimmten Messwert für den Objektabstand einem durch das Winkelpositionssignal (58) bezeichneten Erfassungswinkel zuzuordnen, wobei die Auswahl von Empfangspulsen (102) zu einer Gruppe (56) zeitlich verzögert vorgenommen wird.

2. Optoelektronischer Sensor (10), insbesondere Laserscanner, zur Erfassung und Abstandsbestimmung von Objekten in einem Überwachungsbereich (20) mit einem Lichtsender (12) zum Aussenden eines Sendelichtstrahls (16) mit einer Vielzahl aufeinanderfolgender Einzellichtpulse (54), einer drehbaren Ablenkeinheit (18) zur periodischen Ablenkung des Sendelichtstrahls (16) in den Überwachungsbereich (20), einer Winkelmesseinheit (30) zur Erzeugung von Winkelpositionssignalen (58) in Abhängigkeit von einer Winkelstellung der Ablenkeinheit (18), einem Lichtempfänger (26) zum Erzeugen von Empfangspulsen (102) aus dem von Objekten in dem Überwachungsbereich (20) remittierten oder reflektierten Sendelicht und einer Auswertungseinheit (32), welche dafür ausgebildet ist, eine Vielzahl von Empfangspulsen (102) in einem zeitlichen Histogramm (110) zu sammeln und aus dem Histogramm (110) die Lichtlaufzeit vom Sensor (10) zu einem Objekt und daraus einen Messwert für den Objektabstand zu bestimmen,
wobei
die Auswertungseinheit (32) dafür ausgebildet ist, jeweils anhand des Winkelpositionssignals (58) eine Gruppe (56) von Empfangspulsen (102) auszuwählen, die in einem Histogramm (110) gesammelt wird, und den aus dem Histogramm (110) der Gruppe (56) bestimmten Messwert für den Objektabstand einem durch das Winkelpositionssignal (58) bezeichneten Erfassungswinkel zuzuordnen, wobei in Abhängigkeit von dem Erfassungswinkel und/oder in Abhängigkeit eines zuvor bestimmten Objektabstands die Anzahl von Empfangspulsen (102) in einer Gruppe (56) angepasst wird.

3. Sensor (10) nach Anspruch 1 oder 2,
wobei die Winkelmesseinheit (30) Winkelpositionssignale in einer vorgegebenen Winkelauflösung bereitstellt.

4. Sensor (10) nach einem der vorhergehenden Ansprüche,
wobei die Anzahl der Einzelpulse (54) sowie der zeitliche Abstand zwischen je zwei Einzellichtpulsen (54) klein genug ist, um einen Zeitpuffer zwischen dem jeweils letzten Empfangspuls einer Gruppe (56) und dem nachfolgenden Winkelpositionssignal (58) zu lassen.

5. Sensor (10) nach Anspruch 3 oder 4,
wobei die Auswertungseinheit (32) dafür ausgebildet ist, zu prüfen, ob in dem Zeitraum, in dem die vorgegebene Anzahl von Empfangspulsen (102) erfasst wird, ein weiteres Winkelpositionssignal (58) liegt, und in diesem Fall den aus dem Histogramm (110) der Gruppe (56) bestimmten Messwert für den Objektabstand demjenigen Winkelpositionssignal (58) zuzuordnen, dem die Empfangspulse (102) mehrheitlich zugehören, insbesondere zu dem die aufaddierten Zeitabstände zu den Empfangspulsen (102) der Gruppe (56) am geringsten sind.

6. Sensor (10) nach einem der vorhergehenden Ansprüche,
wobei die Auswertungseinheit (32) mindestens zwei Auswertungskanäle (32a-b) aufweist, um in jedem der Auswertungskanäle Empfangspulse in einem eigenen Histogramm (110) zu sammeln und jeweils aus dem Histogramm (110) die Lichtlaufzeit vom Sensor (10) zu einem Objekt und daraus einen Messwert für den Objektabstand zu bestimmen.

7. Sensor (10) nach Anspruch 6,
wobei die Auswertungskanäle (32a-b) für eine überlappende Auswertung ausgebildet sind, bei der jeweils alternierend ein Auswertungskanal (32a-b) eine vorgegebene Anzahl von Empfangspulsen (102) für eine Gruppe (56) auswählt, die auf ein Winkelpositionssignal (58) folgen.

8. Sensor (10) nach Anspruch 6,
wobei die Auswertungskanäle (32a-b) für eine parallele Auswertung ausgebildet sind, insbesondere mit unterschiedlichen Kriterien für die Auswahl von Empfangspulsen (102) zu einer Gruppe (56).

9. Sensor (10) nach einem der vorhergehenden Ansprüche,
wobei ein analoger Vorverarbeiter (44) vorgesehen ist, der einen Filter (48) aufweist, um jeweils den Empfangspuls (102) zu einem bipolaren vorverarbeiteten Signal (104) umzuwandeln und über einen A/D-Wandler (52) der Auswertungseinheit (32) zuzuführen, wobei insbesondere der analoge Vorverarbeiter (44) einen Begrenzungsverstärker (50) zur Verstärkung des positiven bzw. negativen Anteils des Signals (104) bis auf einen Sättigungswert aufweist und der A/D-Wandler (52) ein Binarisierer ist.

10. Sensor (10) nach einem der vorhergehenden Ansprüche,
der eine Parametriereinrichtung (34) aufweist, um eine höhere Winkelauflösung bei geringerer Reichweite des Sensors (10) einzustellen oder umgekehrt.

11. Sensor (10) nach einem der vorhergehenden Ansprüche;
wobei das Histogramm (110) schon vor dem Sammeln der Empfangspulse (102) mit Vorladewerten vorbelegt ist, wobei insbesondere die Vorladewerte von dem Erfassungswinkel abhängig sind.

12. Sensor (10) nach einem der vorhergehenden Ansprüche,
wobei die Vorladewerte aus einer Kalibriermessung in einem Referenzzustand des Überwachungsbereichs (20) bestimmt sind, insbesondere um einen Frontscheibenreflex vorzuladen.

13. Verfahren zur Erfassung und Abstandsbestimmung von Objekten in einem Überwachungsbereich (20), bei dem ein Sendelichtstrahl (16) mit einer Vielzahl aufeinanderfolgender Einzellichtpulse (54) ausgesandt wird, der Sendelichtstrahl (16) den Überwachungsbereich (20) durch periodisches Ablenken abtastet und aus dem von Objekten in dem Überwachungsbereich (20) remittierten oder reflektierten Sendelicht Empfangspulse (102) erzeugt werden, wobei der Winkel der Ablenkung durch ein Winkelpositionssignal (58) festgestellt wird, eine Vielzahl von Empfangspulsen (102) in einem zeitlichen Histogramm (110) gesammelt und aus dem Histogramm (110) die Lichtlaufzeit zu einem Objekt und daraus ein Messwert für den Objektabstand bestimmt wird,
wobei
jeweils anhand des Winkelpositionssignals (58) eine Gruppe von Empfangspulsen (102) ausgewählt wird, die in einem Histogramm (110) gesammelt wird, dass der aus dem Histogramm (110) der Gruppe bestimmte Messwert für den Objektabstand einem durch das Winkelpositionssignal (58) bezeichneten Erfassungswinkel zugeordnet wird und dass die Auswahl von Empfangspulsen (102) zu einer Gruppe (56) zeitlich verzögert vorgenommen wird.

14. Verfahren zur Erfassung und Abstandsbestimmung von Objekten in einem Überwachungsbereich (20), bei dem ein Sendelichtstrahl (16) mit einer Vielzahl aufeinanderfolgender Einzellichtpulse (54) ausgesandt wird, der Sendelichtstrahl (16) den Überwachungsbereich (20) durch periodisches Ablenken abtastet und aus dem von Objekten in dem Überwachungsbereich (20) remittierten oder reflektierten Sendelicht Empfangspulse (102) erzeugt werden, wobei der Winkel der Ablenkung durch ein Winkelpositionssignal (58) festgestellt wird, eine Vielzahl von Empfangspulsen (102) in einem zeitlichen Histogramm (110) gesammelt und aus dem Histogramm (110) die Lichtlaufzeit zu einem Objekt und daraus ein Messwert für den Objektabstand bestimmt wird,
wobei
jeweils anhand des Winkelpositionssignals (58) eine Gruppe von Empfangspulsen (102) ausgewählt wird, die in einem Histogramm (110) gesammelt wird, dass der aus dem Histogramm (110) der Gruppe bestimmte Messwert für den Objektabstand einem durch das Winkelpositionssignal (58) bezeichneten Erfassungswinkel zugeordnet wird und dass in Abhängigkeit von dem Erfassungswinkel und/oder in Abhängigkeit eines zuvor bestimmten Objektabstands die Anzahl von Empfangspulsen (102) in einer Gruppe (56) angepasst wird.

## Claims

1. An optoelectronic sensor (10), in particular a laser scanner, for the detection and distance determination of objects in a monitoring area (20), the sensor (10) comprising a light transmitter (12) for transmitting a transmission light beam (16) with a plurality of successive individual light pulses (54), a rotatable deflecting unit (18) for periodically deflecting the transmission light beam (16) in the monitoring area (20), an angle encoding unit (30) for generating angular position signals (58) in dependence on an angle position of the deflecting unit (18), a light receiver (26) for generating reception pulses (102) from the transmission light reflected or remitted by objects in the monitoring area (20), and an evaluation unit (32) which is configured to collect a plurality of reception pulses (102) in a time histogram (110) and to determine the light time of flight from the sensor (10) to an object from the histogram (110) and, from that, a measured value for the object distance, wherein the evaluation unit (32) is configured to select a respective group (56) of reception pulses (102) that is collected in a histogram (110) based on the angular position signal (58) and to assign the measured value for the object distance determined from the histogram (110) of the group (56) to a detection angle identified by the angular position signal (58), wherein the selection of reception pulses (102) to a group (56) is made with a time delay.

2. An optoelectronic sensor (10), in particular a laser scanner, for the detection and distance determination of objects in a monitoring area (20), the sensor (10) comprising a light transmitter (12) for transmitting a transmission light beam (16) with a plurality of successive individual light pulses (54), a rotatable deflecting unit (18) for periodically deflecting the transmission light beam (16) in the monitoring area (20), an angle encoding unit (30) for generating angular position signals (58) in dependence on an angle position of the deflecting unit (18), a light receiver (26) for generating reception pulses (102) from the transmission light reflected or remitted by objects in the monitoring area (20), and an evaluation unit (32) which is configured to collect a plurality of reception pulses (102) in a time histogram (110) and to determine the light time of flight from the sensor (10) to an object from the histogram (110) and, from that, a measured value for the object distance, wherein the evaluation unit (32) is configured to select a respective group (56) of reception pulses (102) that is collected in a histogram (110) based on the angular position signal (58) and to assign the measured value for the object distance determined from the histogram (110) of the group (56) to a detection angle identified by the angular position signal (58), wherein the number of reception pulses (102) in a group (56) is adapted in dependence on the detection angle and/or in dependence on an object distance previously determined.

3. The sensor (10) according to claim 1 or 2,
wherein the angle encoding unit (30) provides angular position signals (58) of a preset angular resolution.

4. The sensor (10) according to any of the preceding claims,
wherein the number of individual light pulses (54) and the time difference between two respective individual light pulses (54) is small enough to allow a time buffer between the last reception pulse of a group (56) and the subsequent angle position signal (58).

5. The sensor (10) according to claim 3 or 4,
wherein the evaluation unit (32) is configured to test whether there is an additional angular position signal (58) during the time interval in which the preset number of reception pulses (102) is detected, and to in that case assign the measured value for the object distance determined from the histogram (110) of the group (56) to that angular position signal (58) to which the majority of the reception pulses (102) belong, in particular from which the added time differences to the reception pulses (102) of the group (56) are minimal.

6. The sensor (10) according to any of the preceding claims,
wherein the evaluation unit (32) comprises at least two evaluation channels (32a, 32b) to collect reception pulses in each evaluation channel in its own histogram (110) and to determine the light time of flight from the sensor (10) to an object and from that a measured value for the object distance from the histogram (110).

7. The sensor (10) according to claim 6,
wherein the evaluation channels (32a, 32b) are configured for an overlapping evaluation, where the evaluation channels (32a, 32b) alternately select a preset number of reception pulses (102) following an angular position signal (58) for a group (56).

8. The sensor (10) according to claim 6,
wherein the evaluation channels (32a, 32b) are configured for a parallel evaluation, in particular to use different criteria for the selection of reception pulses (102) of a group (56).

9. The sensor (10) according to any of the preceding claims,
wherein an analog preprocessor (44) is provided that comprises a filter (48) to convert the reception pulse (102) into a bipolar preprocessed signal (104) which is fed to an A/D converter (52) of the evaluation unit (32), wherein in particular the analog preprocessor (44) comprises a limiting amplifier (50) for amplifying the positive component and the negative component of the bipolar preprocessed signal (104) to a saturation value and the A/D converter (52) is a binarizer.

10. The sensor (10) according to any of the preceding claims,
comprising a parameterization unit (34) to set a higher angular resolution at a lower range of the sensor (10) or vice versa.

11. The sensor (10) according to any of the preceding claims,
wherein the histogram (110) is initialized with initial values even before collecting reception pulses (102), wherein in particular the initial values depend on the detection angle.

12. The sensor (10) according to any of the preceding claims"
wherein the initial values are determined by a calibration measurement in a reference state of the monitoring area (20), in particular to initialize with a front screen reflex.

13. A method for the detection and distance determination of objects in a monitoring area (20), wherein a transmission light beam (16) with a plurality of successive individual light pulses (54) is transmitted, the transmission light beam (16) scans the monitoring area (20) by periodic deflection, and reception pulses (102) are generated from the transmission light reflected or remitted from objects in the monitoring area (20), wherein the angle of deflection is determined by an angular position signal (58), a plurality of reception pulses (102) is collected in a time histogram (110) and the light time of flight to an object is determined from the histogram (110) and, from that, a measured value for the object distance is determined, wherein a respective group (56) of reception pulses (102) which is collected in a histogram (110) is selected based on the angular position signal (58), the measured value for the object distance determined from the histogram (110) of the group (56) is assigned to a detection angle identified by the angular position signal (58), and the selection of reception pulses (102) to a group (56) is made with a time delay.

14. A method for the detection and distance determination of objects in a monitoring area (20), wherein a transmission light beam (16) with a plurality of successive individual light pulses (54) is transmitted, the transmission light beam (16) scans the monitoring area (20) by periodic deflection, and reception pulses (102) are generated from the transmission light reflected or remitted from objects in the monitoring area (20), wherein the angle of deflection is determined by an angular position signal (58), a plurality of reception pulses (102) is collected in a time histogram (110) and the light time of flight to an object is determined from the histogram (110) and, from that, a measured value for the object distance is determined, wherein a respective group (56) of reception pulses (102) which is collected in a histogram (110) is selected based on the angular position signal (58), the measured value for the object distance determined from the histogram (110) of the group (56) is assigned to a detection angle identified by the angular position signal (58), and the number of reception pulses (102) in a group (56) is adapted in dependence on the detection angle and/or in dependence on an object distance previously determined.

## Revendications

1. Capteur optoélectronique (10), en particulier scanneur à laser, pour la détection et la détermination de l'éloignement d'objets dans une zone de surveillance (20), comprenant un émetteur de lumière (12) pour émettre un rayon de lumière émise (16) avec une pluralité d'impulsions lumineuses individuelles successives (54), une unité de déflexion rotative (18) pour la déflexion périodique du rayon de lumière émise (16) vers la zone de surveillance (20), une unité de mesure angulaire (30) pour engendrer des signaux de position angulaire (58) en fonction d'une position angulaire de l'unité de déflexion (18), un récepteur de lumière (26) pour engendrer des impulsions de réception (102) à partir de la lumière émise qui a été réémise ou réfléchie par des objets dans la zone de surveillance (20), et une unité d'évaluation (32) qui est réalisée pour collecter une pluralité d'impulsions de réception (102) dans un histogramme temporel (110) et pour déterminer à partir de l'histogramme (110) le temps de parcours de la lumière depuis le capteur (10) jusqu'à un objet et déterminer à partir de celui-ci une valeur de mesure pour l'éloignement de l'objet,
dans lequel l'unité d'évaluation (32) est réalisée pour sélectionner, respectivement à l'aide du signal de position angulaire (58), un groupe (56) d'impulsions de réception (102) qui sont collectées dans un histogramme (110) et pour associer la valeur de mesure, déterminée à partir de l'histogramme (110) du groupe (56), pour l'éloignement de l'objet à un angle de détection désigné par le signal de position angulaire (58), et la sélection d'impulsions de réception (102) appartenant à un groupe (56) est effectuée de façon retardée dans le temps.

2. Capteur optoélectronique (10), en particulier scanneur à laser, pour la détection et la détermination d'éloignement d'objets dans une zone de surveillance (20), comprenant un émetteur de lumière (12) pour émettre un rayon de lumière émise (16) avec une pluralité d'impulsions de lumières individuelles successives (54), une unité de déflexion rotative (18) pour la déflexion périodique du rayon de lumière émise (16) vers la zone de surveillance (20), une unité de mesure angulaire (30) pour générer des signaux de position angulaire (58) en fonction d'une position angulaire de l'unité de déflexion (18), un récepteur de lumière (26) pour engendrer des impulsions de réception (102) à partir de la lumière émise réémise ou réfléchie depuis des objets dans la zone de surveillance (20), et une unité d'évaluation (32), qui est réalisée pour collecter une pluralité d'impulsions individuelles (102) dans un histogramme temporel (110) et pour déterminer à partir de l'histogramme (110) le temps de parcours de la lumière depuis le capteur (10) jusqu'à un objet et déterminer à partir de celui-ci une valeur de mesure pour l'éloignement de l'objet,
dans lequel l'unité d'évaluation (32) est réalisé pour sélectionner respectivement à l'aide du signal de position angulaire (58) un groupe (56) d'impulsions de réception (102) qui sont collectées dans un histogramme (110) et pour associer la valeur de mesure, déterminée à partir de l'histogramme (110) du groupe (56), pour l'éloignement de l'objet à un angle de détection désigné par le signal de position angulaire (58), dans lequel le nombre d'impulsions de réception (102) dans un groupe (56) est adapté en fonction de l'angle de détection et/ou en fonction d'un éloignement de l'objet auparavant déterminé.

3. Capteur (10) selon la revendication 1 ou 2,
dans lequel l'unité de mesure angulaire (30) prépare les signaux de position angulaire avec une résolution angulaire prédéterminée.

4. Capteur (10) selon l'une des revendications précédentes,
dans lequel le nombre des impulsions individuelles (54) ainsi que l'écart temporel entre deux impulsions lumineuses individuelles (54) sont suffisamment petits pour laisser un tampon temporel entre la dernière impulsion de réception respective d'un groupe (56) et le signal de position angulaire (58) successif.

5. Capteur (10) selon la revendication 3 ou 4,
dans lequel l'unité d'évaluation (32) est réalisée pour vérifier si, pendant la période dans laquelle le nombre prédéterminé d'impulsions de réception (102) sont détectées, un autre signal de position angulaire (58) se présente et, dans ce cas, pour associer la valeur de mesure, déterminée à partir de l'histogramme (110) du groupe (56), pour l'éloignement de l'objet, au signal de position angulaire (58) auquel appartiennent en majorité les impulsions de réception (102), en particulier à celui pour lequel les écarts temporels additionnés vis-à-vis des impulsions de réception (102) du groupe (56) sont les plus faibles.

6. Capteur (10) selon l'une des revendications précédentes,
dans lequel l'unité d'évaluation (32) comprend au moins deux canaux d'évaluation (32a-b), afin de collecter dans chacun des canaux d'évaluation des impulsions de réception dans un propre histogramme (110) et pour déterminer respectivement à partir de l'histogramme (110) le temps de parcours de la lumière depuis le capteur (10) jusqu'à un objet et pour déterminer à partir de celui-ci une valeur de mesure pour l'éloignement de l'objet.

7. Capteur (10) selon la revendication 6,
dans lequel les canaux d'évaluation (32a-b) sont réalisés pour une évaluation à chevauchement dans laquelle de manière respectivement alternée un canal d'évaluation (32a-b) sélectionne un nombre prédéterminé d'impulsions de réception (102) pour un groupe (56), qui suivent un signal de position angulaire.

8. Capteur (10) selon la revendication 6,
dans lequel les canaux d'évaluation (32a-b) sont réalisés pour une évaluation parallèle, en particulier avec différents critères pour la sélection des impulsions de réception (102) appartenant à un groupe (56).

9. Capteur (10) selon l'une des revendications précédentes,
dans lequel il est prévu une unité de prétraitement analogique (44) qui comprend un filtre (48) afin de convertir respectivement l'impulsion de réception (102) en un signal bipolaire prétraité (104) et l'admettre via un convertisseur analogique/numérique (52) à l'unité d'évaluation (32), dans lequel en particulier l'unité de prétraitement analogique (44) comprend un amplificateur-limiteur (50) pour amplifier la part positive ou négative du signal (104) jusqu'à une valeur de saturation, et le convertisseur analogique/numérique (52) est un convertisseur binaire.

10. Capteur (10) selon l'une des revendications précédentes,
qui comprend un dispositif de paramétrage (34) afin d'établir une résolution angulaire plus élevée avec une portée plus faible du capteur (10) ou inversement.

11. Capteur (10) selon l'une des revendications précédentes,
dans lequel l'histogramme (110) est préchargé avec des valeurs préalables déjà avant la collecte des impulsions de réception (102), dans lequel les valeurs préalables sont en particulier fonction de l'angle de détection.

12. Capteur (10) selon l'une des revendications précédentes,
dans lequel les valeurs préalables sont déterminées à partir d'une mesure de calibrage dans un état de référence de la zone de surveillance (20), en particulier afin de précharger une réflexion sur un pare-brise avant.

13. Procédé pour la détection et la détermination d'éloignement d'objets dans une zone de surveillance (20), dans lequel on émet un rayon de lumière émise (16) avec une pluralité d'impulsions de lumière individuelles successives (54), le rayon de lumière émise (16) balaie la zone de surveillance (20) par déflexion périodique et des impulsions de réception (102) sont engendrées à partir de la lumière émise qui est réémise ou réfléchie à partir d'objets dans la zone de surveillance (20), dans lequel l'angle de déflexion est fixé par un signal de position angulaire (58), on collecte une pluralité d'impulsions de réception (102) en un histogramme temporel (110) et on détermine à partir de l'histogramme (110) le temps de parcours de la lumière jusqu'à un objet et on détermine à partir de celui-ci une valeur de mesure pour l'éloignement de l'objet,
dans lequel on sélectionne respectivement à partir du signal de position angulaire (58) un groupe d'impulsions de réception (102) qui sont collectées dans un histogramme (110), on associe la valeur de mesure, déterminée à partir de l'histogramme (110) du groupe, pour l'éloignement d'un objet à un angle de détection désigné par le signal de position angulaire (58), et on effectue la sélection d'impulsions de réception (102) pour former un groupe (56) de manière retardée dans le temps.

14. Procédé pour la détection et la détermination d'éloignement d'objets dans une zone de surveillance (20), dans lequel on émet un rayon de lumière émise (16) avec une pluralité d'impulsions de lumière individuelles successives (54), le rayon de lumière émise (16) balaye la zone de surveillance (20) par déflexion périodique et des impulsions de réception sont engendrées à partir de la lumière émise qui est réémise ou réfléchie depuis des objets dans la zone de surveillance (20), dans lequel l'angle de déflexion est fixé par un signal de position angulaire (58), on collecte une pluralité d'impulsions de réception (102) dans un histogramme temporel (110) et on détermine à partir de l'histogramme (110) le temps de parcours de la lumière jusqu'à un objet et à partir de celui-ci on détermine une valeur de mesure pour l'éloignement de l'objet,
dans lequel on sélectionne respectivement à l'aide du signal de position angulaire (58) un groupe d'impulsions de réception (102) qui sont collectées dans un histogramme (110), on associe la valeur de mesure, déterminée à partir de l'histogramme (110) du groupe, pour l'éloignement de l'objet, à un angle de détection désigné par le signal de position angulaire (58), et on adapte le nombre d'impulsions de réception (102) dans un groupe (56) en fonction de l'angle de détection et/ou en fonction d'un éloignement préalablement déterminé de l'objet.
